Europäisches Patentamt

European Patent Office

Office européen des brevets

(11) Publication number: **0 237 493**
**A1**

(12)

# EUROPEAN PATENT APPLICATION

(21) Application number: 87830057.3

(22) Date of filing: 16.02.87

(51) Int. Cl.³: **D 04 B 15/90**

(30) Priority: 14.03.86 IT 336486

(43) Date of publication of application:
16.09.87 Bulletin 87/38

(84) Designated Contracting States:
CH DE ES FR GB LI

(71) Applicant: E.M.M. EMILIANA MACCHINE MAGLIERIE
s.r.l.
Via della Pace 2A
Padulle di Sala Bolognese Bologna(IT)

(72) Inventor: Stoppazzini, Benito
Via Gramsci 170/B
I-40010 Sala Bolognese Bologna(IT)

(74) Representative: Dall'Olio, Giancarlo
INVENTION s.n.c. Via Arienti 26
I-40124 Bologna(IT)

(54) A device for controlling the fabric tension during knitting in automatic flat knitting machines.

(57) The device includes two rollers (2, 3) located under the needle beds of the knitting machine, kept tangent to each other and designed, in combination, to exert a tension T on the fabric (5) being knitted.

A chain (7) is looped loosely around a small sprocket (8) and a large sprocket (9), the latter being splined to one of the aforementioned rollers.

There is a first unit (12) designed to tension inwardly the front branch (7a) of the chain and a second unit (13) designed to tension the rear branch (7b) of the chain outwardly.

During the knitting of the fabric, the programmed values of tension T are obtained and maintained by sensors (19) associated to the first unit (12) and by a control unit (20), that is connected to the said sensors (19) and that controls the power driving means which rotates the small sprocket (8), keeping the front branch (7a) tensioned.

Fig. 1

A device for controlling the fabric tension during knitting in automatic flat knitting machines

The present invention concerns the manufacturing sector of automatic flat knitting machines, specifically applying to devices controlling the tension of the knitted fabric produced in what is known as the needles' working area.

The aforesaid machines, that have recently been equipped with electronic control units using knitting control programs, generally maintain the vertical tension of the knitted fabric through the use of two knurled rollers, equal in length to that of the relevant needle beds, that work in conjunction with a longitudinally moving carriage.

The said rollers are located, touching one another, beneath the needle bed, and parallel to this latter, rotating in opposite directions through preset angles, at the end of every stroke of the carriage, for example.

The knitted fabric, inserted between the two rollers, is thus maintained under uniform tension by these latter, during the time that elapses between one stroke of the carriage and the next.

In the tensioning devices currently in use, the usual practice is to carry out preliminary tests designed to establish the optimum tension.

When the desired tension is achieved, the data needed to command the tensioning rollers are stored and knitting may begin.

At the end of each stroke of the carriage, the rollers turn through the preset angle whether the fabric tension thus obtained corresponds to the optimum value found during the preliminary tests or is less than or greater than this value.

The fabric tension may vary from the set value for any of several reasons which are not always easy to identify: variations in the diameter of the thread, possible differences in the machine's operating speed between test and actual production, a different amount of fabric already knitted, these are just some of the variables that may give rise to this problem, to the obvious detriment of the overall quality of the product.

The object of the present invention is to produce a device able to keep the tension to previously defined values while the fabric is being knitted, by instantaneously adjusting the tensioning parameters in accordance with any subsequent variations from the preset value, whatever their cause.

The said object is achieved by means of a device for controlling the fabric tension during knitting in an automatic flat knitting machine, the device being positioned under the needle beds of the said machine and being of the type that includes two parallel rollers, upper and lower respectively, that are at least as long as the needle beds and mutually tangent in such a manner that the knitted fabric from the needle beds above passes between them and is pulled down and, consequently, tensioned; the aforementioned device being characterized by the fact that it includes: a chain that is looped loosely around a small, power-driven sprocket and a large sprocket splined to the aforementioned upper roller, the said chain forming a front branch positioned on the same side as the portion of fabric that is upstream of the aforementioned rollers, and a rear branch; a first unit for tensioning the front branch inwards; a second unit for tensioning the rear branch outwards; means, associated to the first unit and operating on the power driving means of the aforementioned small sprocket designed to control the tension of the aforementioned front branch during the knitting of the fabric, in accordance with the preset tensioning parameters.

The characteristics of the invention are emphasised hereinafter with specific reference to the attached drawings, in which:

- Figure 1 shows a schematic side view of the device in question;

- Figure 2 shows a partial front view of the fabric tensioning rollers.

With reference to the said figures, shown at 1 is a tensioning unit constituted by two mutually touching rollers 2 and 3, upper and lower, respectively.

The aforementioned rollers 2 and 3 are located in the area beneath the needle beds (not illustrated) of an automatic flat knitting machine and are parallel and equal in length to the said needle beds.

The upper roller 2 is larger in diameter than the lower roller 3, is rotatably mounted on the frame (not illustrated) of the aforementioned machine, and is positioned in such a way that its circumference has tangent to it the fabric 5 moving down from the working area (not illustrated) of the aforementioned needle beds.

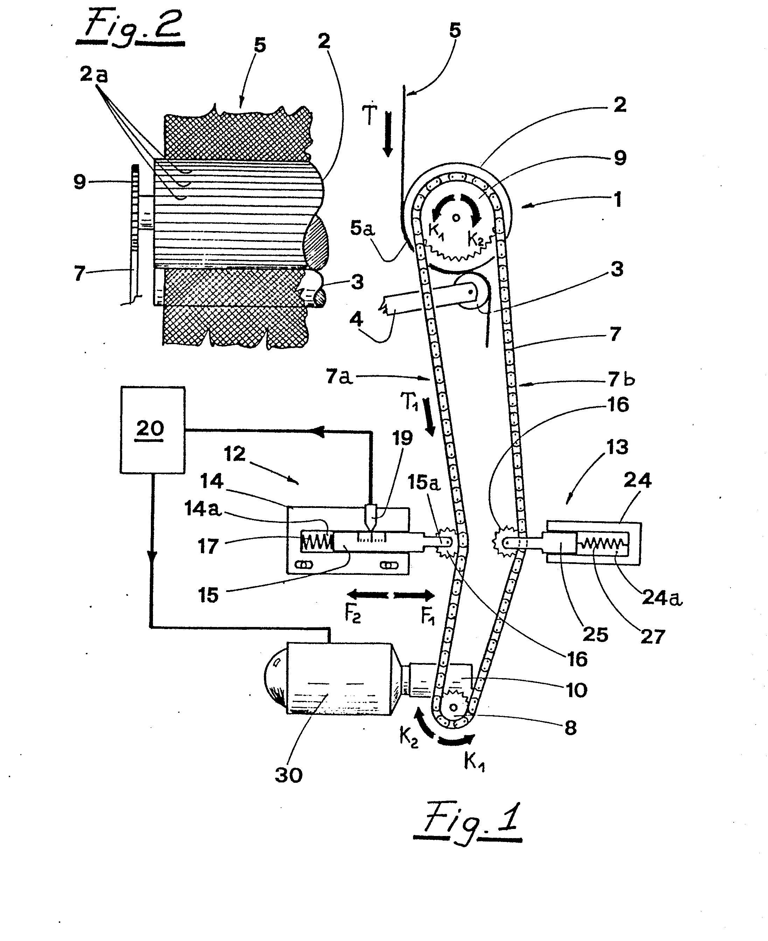

The circumferential surface of the upper roller 2 is shaped in such a way as to increase the "hold" it has on the fabric; Fig.2, by way of example, shows knurling 2a.

The lower roller 3 is supported by a swinging arm 4 associated to the frame of the machine and is kept tangent to the aforementioned roller 2 by elastic means, which are not illustrated, operating on the said arm 4.

A portion 5a of the fabric, as it slowly moves down, partially enfolds roller 2, is inserted between the latter and the lower roller 3, partially enfolding it, and proceeds to the area below.

Since fabric 5 during knitting is anchored to the needles, it is obvious that the degree of tension exerted on the rows of fabric 5 already knitted depends on the amount of tension T which the tensioning unit 1 exerts on portion 5a.

The aforementioned tensioning T is achieved by upper roller 2 turning in direction K1.

The said upper roller 2 is made to turn in direction K1 by a chain 7 looped loosely around a small sprocket 8 and a large sprocket 9, the latter being splined to the said upper roller.

Small sprocket 8 is power driven by means 30 through a device 10 of known type that achieves an adequate gear ratio. In the example described, the said power-operated driving means 30 consists of a motor of known type. The chain 7 engages with the large sprocket 9 and the small sprocket 8 in such a way as to form two vertical branches 7a and 7b, front and rear respectively.

Shown at 12 and 13 are two units, first and second, for the inward tensioning of the front branch 7a and the outward tensioning of the rear branch 7b; these units operate on the same horizontal axis; in the case described here, the units 12 and 13 consist of two chain tensioner units, front and rear, respectively.

Front chain tensioner 12 consists basically of a fixed part or casing 14, with a housing 14a made in it in which stem 15 is free to slide axially.

The outer end 15a of the stem rotatably mounts a small toothed wheel 16 which engages with the aforementioned branch 7a of the chain 7.

A compressed spring 17 inside housing 14a exerts on stem

a force F1, which increases proportionally to the compression of spring 17.

It follows that every position of the stem 15 in relation to casing 14 corresponds to a particular value of force F1; when the stem is balanced, the force is counteracted by an equal opposing force T1 exerted on tensioned branch 7a which in turn operates on small toothed wheel 16.

In conditions of balance, force T1 imparts on roller 2 a moment that is balanced by the moment due to the effect of springback of fabric 5 tensioned with force T.

It follows that in conditions of balance, the tensioning force T exerted on fabric 5 is matched by force F1 which, as we have seen, is a function of the stem's position in relation to the casing.

A position sensor (e.g. a potentiometer), associated with casing 4, generates an electrical signal indicating the position of the stem in relation to the casing; in view of the above, the signal also indicates the tensioning force T exerted on the fabric 5 in conditions of balance described above.

The rear tensioner 13 operates on branch 7b of chain 7 and is similar in structure to front tensioner 12 to which it is parallel and symmetrically aligned: in fact, the unit consists of a casing 24 with a stem 25 sliding in housing 24a and mounting a small toothed wheel 16 identical to that on the front tensioner.

An extension spring 27 exerts a force F1 on stem 25; the consequent tension on chain branch 7b is such that the branch, like 7a, forms two half lines at an angle to each other.

The device in question is also equipped with a control unit 20 (microprocessor), which processes the signal generated by the sensors 19.

Unit 20 is designed to control the automatic flat knitting machine which the device in question is associated to; in particular it is designed to drive the power-operated means 30.

The operating programme which manages unit 30 includes values of the tensioning force T such as to achieve the optimal tensioning of fabric 5 during knitting; unit 20 is therefore designed to set the sequence of the values of force T and to hold each value during the "programme interval" at a constant level.

The device described above operates as follows.

Unit 20 commands sprocket 8 in accordance with the preset tensioning value until the latter is matched by the signal generated by the sensors 19; hence, the sprocket is turned in direction K1 if the preset value is greater than the value "measured" by sensors 19 and in direction K2 if it is less.

During the working stroke of the carriage mentioned earlier, one or more rows of fabric 5 are gradually formed; this decreases the springback of the fabric, which in turn makes the roller 2 turn in direction K1: as a result, a part of chain 7 moves from branch 7b towards branch 7a, which causes stem 15 to move in accordance with F1.

The condition just mentioned is "measured" by the sensors 19; unit 20 operates on the power-operated means 30 in such a way as to cause sprocket 8 to turn in direction K1 until the programmed tensioning value of T is reached.

Thus, the device in question enables tension T to be kept at the programmed value by operating on sprocket 8 in successive steps consequent upon the sliding of stem 15 according to F2.

If the programmed tensioning value is greater than the previously set value, the device "adjusts" to this new value by operating instantaneously on sprocket 8 to make it turn in direction K1 until the new value is that "measured" by the sensors 19 and then held in the manner described above.

On the other hand, if the tensioning value is less than the previously set value, the device operates instantaneously on sprocket 8 to make it turn in direction K2, opposite to K1, until the new value is that "measured" by the sensors 19 and then held in the manner described above.

In other terms, the device described above is an uncomplicated, reliable system for controlling the tension of knitted fabric in accordance with a desired programme, while the fabric is in the process of being knitted and it should be emphasized, furthermore, that the system is designed to be controlled by a microprocessor unit 20.

It is understood that the description supplied herein is solely an unlimited example such that possible variations in the construction details (thus, for instance, a cog belt might be used instead of a chain, proximity sensors instead of a potentiometer, etc.) will not affect the protective framework afforded to the invention as claimed hereinafter.

CLAIMS

1) A device for controlling the fabric tension during knitting in an automatic flat knitting machine, the said device being positioned under needle beds of the said machine and being of the type that includes two parallel rollers (2, 3), upper and lower respectively, that are at least as long as the needle beds and mutually tangent in such a manner that knitted fabric (5) from the needle beds above passes between the said rollers (2,3) and is pulled down and, consequently, tensioned; the aforementioned device being characterized by the fact that it includes: a chain (7) that is looped loosely around a small sprocket (8) that is power-operated by driving means (30) and a large sprocket (9) that is splined to the aforementioned upper roller (2), the said chain (7) forming a front branch (7a), positioned on the same side as the portion of fabric that is upstream of the aforementioned rollers (2,3), and a rear branch (7b); a first unit (12) for tensioning the front branch (7a) inwards; a second unit (13) for tensioning the rear branch (7b) outwards; means, associated to the first unit and operating on the power driving means, designed to control the tension of the aforementioned front branch during the knitting of the fabric (5), in accordance with preset tensioning parameters.

2) A device according to claim 1 characterized by the fact that the aforementioned first unit includes: a stem (15) mounted on a fixed casing (14) from which it protrudes; a small toothed wheel (16) that is rotatably mounted on the outer end (15a) of the aforementioned stem (15) and that engages with the aforementioned front branch (7a); compressed, elastic means (17) located between the casing (14) and the inner end of the stem (15); and characterized by the fact that the means associated to the aforementioned first unit and operating on the said power driving means include: sensors (19) designed to measure the position of the aforementioned stem (15) in relation to the casing (14); a control unit (20),which the said sensors (19) and power driving means (30) are connected to and which is designed to control the latter in such a manner as to turn the small sprocket (8) when a programmed tension value of the said control unit is different from the value measured by the said sensors (19).

3) A device according to claim 1 characterized by the fact that the aforementioned first and second units operate on the front branch (7a) and on the rear branch (7b) respectively on the same horizontal axis.

0237493

Fig.2

Fig.1

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | DE-A-3 304 546 (STOLL) | | D 04 B 15/90 |
| | --- | | |
| A | GB-A- 768 041 (T.M.M.) | | |
| | --- | | |
| A | US-A-4 478 595 (HAYAKAWA) | | |
| | --- | | |
| A | US-A-3 044 052 (MARSH) | | |
| | ----- | | |
| | | | **TECHNICAL FIELDS SEARCHED (Int Cl.4)** |
| | | | D 04 B<br>D 03 D<br>B 65 H<br>H 02 K<br>F 16 H<br>G 05 D |

The present search report has been drawn up for all claims

| Place of search | Date of completion of the search | Examiner |
|---|---|---|
| THE HAGUE | 24-06-1987 | VAN GELDER P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82